# EUROPEAN PATENT APPLICATION

(11) **EP 4 383 527 A1**
(43) Date of publication of application: **12.06.2024**
(21) Application number: 22853077.0
(22) Date of filing: 02.08.2022
(51) Int. Cl.: H02K 3/26, H01F 5/04

(54) **COIL BOARD, COIL BOARD FOR MOTOR USE, AND MOTOR**

(30) Priority: 03.08.2021 JP 2021127282
(71) Applicant: IBIDEN CO., LTD., Ogaki-shi, Gifu 503-8604 (JP)
(72) Inventor: HIASAWA, Takahisa, Ogaki-shi, Gifu 503-8503 (JP); FURUNO, Takayuki, Ogaki-shi, Gifu 503-8503 (JP)
(74) Representative: Hoefer & Partner Patentanwälte mbB
(86) International application number: PCT/JP2022/029720
(87) International publication number: WO 2023/013658

(57) **Abstract**

Provided are: a coil board which ensures a withstand voltage and enables a motor having stable performance to be obtained, a motor coil board formed by using the coil board, and a motor formed by using the motor coil board. A coil board of an embodiment comprises: a flexible board having a first face and a second face on the opposite side to the first face; and coils formed by coil-shaped wires provided on the first face and coil-shaped wires provided on the second face. An inter-wire distance of the wires on the first face is greater than an inter-wire distance of the wires on the second face.

## Description

### Technical Field

The technology disclosed in the present specification relates to a coil board, a motor coil board formed by using the coil board, and a motor formed by using the motor coil board.

### Background Art

Patent Document 1 describes a coil board comprising a flexible board and spiral-shaped wires formed on both surfaces of the flexible board. A motor coil board is formed by winding the coil board into a cylindrical shape. A motor is formed by arranging the formed motor coil board on the inside of a cylindrical yoke, and arranging a rotary shaft and a magnet on the inside of the motor coil board.

### Prior Art Documents

### Patent Documents

Patent Document 1: JP 2020-61532 A

### Summary of the Invention

### [Problems in Patent Document 1]

In the technology of Document 1, when the coil board has been wound into a cylindrical shape, the wires arranged on an inner circumferential side come closer together as the flexible board deforms. Consequently, it is feasible that a short circuit will occur between the wires that are close together when a high voltage is applied.

### Means for Solving the Problems

A coil board of the present invention comprises: a flexible board having a first face and a second face on the opposite side to the first face; and coils formed by coil-shaped wires provided on the first face and coil-shaped wires provided on the second face. An inter-wire distance of the wires on the first face is greater than an inter-wire distance of the wires on the second face.

In a coil board according to an embodiment of the present invention, the inter-wire distance of the wires on the first face is greater than the inter-wire distance of the wires on the second face. When the coil board is wound into a cylindrical shape with the first face arranged on an inner circumferential side and the second face arranged on an outer circumferential side in order to form a motor coil board, a distance is therefore maintained between the wires on the first face, and there is no contact between the wires. The occurrence of a short circuit between the wires on the first face can also be suppressed when a high voltage is applied. When a motor is formed by using the coil board, a withstand voltage of the motor is ensured and a motor having stable performance can be obtained.

One motor coil board of the present invention is formed by winding the coil board of the present invention into a cylindrical shape. The first face is arranged on the inner circumferential side and the second face is arranged on the outer circumferential side.

In one motor coil board according to an embodiment of the present invention, a distance is maintained between the wires on the first face and there is no contact between said wires. The occurrence of a short circuit between the wires on the first face can also be suppressed when a high voltage is applied. When a motor is formed by using the motor coil board, the withstand voltage of the motor is ensured and a motor having stable performance can be obtained.

Another motor coil of the present invention is formed by winding, into a cylindrical shape, a coil board comprising a flexible board having a first face and a second face on the opposite side to the first face; and coils formed by coil-shaped wires provided on the first face and coil-shaped wires provided on the second face. The first face is arranged on the inner circumferential side. The second face is arranged on the outer circumferential side. A first distance between top portions of the wires on the first face is largely equal to a second distance between bottom portions of the wires on the second face arranged on the outer circumferential side.

When the coil board is wound into a cylindrical shape, the top portions of the wires on the first face on the inner circumferential side are closest together, and the bottom portions of the wires on the second face on the outer circumferential side are closest together. In another motor coil board according to an embodiment, the first distance between the top portions of the wires on the first face and the second distance between the bottom portions of the wires on the second face are kept largely equal. The occurrence of a short circuit between the wires on the first face can also be suppressed when a high voltage is applied. Furthermore, the distance between the wires on the second face does not open up excessively either, so a space factor of the motor coil board can also be kept at a high level. When a motor is formed by using the motor coil board, the withstand voltage of the motor is ensured and a motor having stable performance can be obtained.

A motor of the present invention is formed by arranging the motor coil board of the present invention on the inside of a cylindrical yoke, and arranging a rotary shaft and a magnet on the inside of the motor coil board.

In a motor according to an embodiment of the present invention, the occurrence of a short circuit between the wires is also suppressed when a high voltage is applied. The withstand voltage of the motor is ensured and a motor having stable performance can be obtained.

### Brief Description of the Drawings

[Fig. 1] is a plan view schematically showing a coil board according to an embodiment.
[Fig. 2] is a bottom view schematically showing the coil board according to an embodiment.
[Fig. 3] is a view in cross section schematically showing a portion of the coil board according to an embodiment.
[Fig. 4] is an oblique view schematically showing a motor coil board according to an embodiment.
[Fig. 5] is an enlarged explanatory diagram of a portion of fig. 4.
[Fig. 6] is a view in cross section schematically showing a motor according to an embodiment.
[Fig. 7] is a plan view schematically showing a coil board according to a first modified example of the embodiment.
[Fig. 8] is a view in cross section schematically showing a portion of the coil board according to the first modified example.

### Embodiments of the Invention

### [Embodiments]

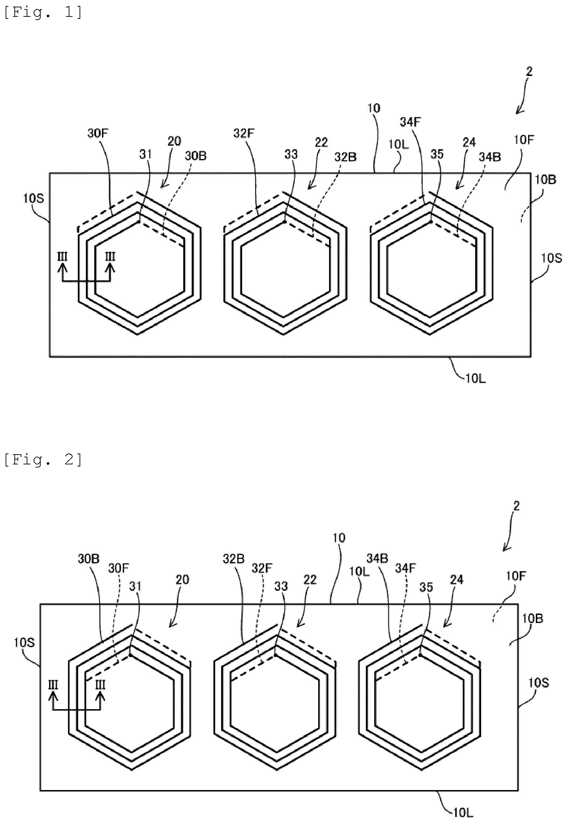

Fig. 1 is a plan view showing a coil board 2 according to an embodiment. Fig. 2 is a bottom view showing the coil board 2 according to an embodiment. The coil board 2 comprises a flexible board 10 and a plurality of coils 20, 22, 24.

The flexible board 10 is a resin board comprising a first face 10F and a second face 10B on the opposite side to the first face 10F. The flexible board 10 is formed by using an insulating resin such as polyimide or polyamide. The flexible board 10 is capable of flexing. The flexible board 10 is formed in a rectangular shape having short sides 10S and long sides 10L.

The coils 20, 22, 24 are aligned along the long sides 10L of the flexible board 10. In the embodiment, the flexible board 10 is provided with the three coils 20, 22, 24, but the flexible board 10 may equally be provided with two or three or more coils in a modified example.

The coil 20 comprises coil-shaped first wires 30F (fig. 1) provided on a first face 10F and coil-shaped second wires 30B (fig. 2) provided on a second face 10B. The first wires 30F and the second wires 30B are electrically connected through a via conductor 31 penetrating the flexible board 10. The coil 22 likewise comprises coil-shaped first wires 32F and second wires 32B. The first wires 32F and the second wires 32B are electrically connected through a via conductor 33 penetrating the flexible board 10. The coil 24 comprises coil-shaped first wires 34F (fig. 1) and second wires 34B (fig. 2). The first wires 34F and the second wires 34B are electrically connected through a via conductor 35 penetrating the flexible board 10.

As shown in fig. 1, the first wires 30F are formed in a spiral shape (hexagonal spiral shape) winding clockwise from the outer circumference toward the inner circumference. A connection terminal for connecting a connecting cord (not depicted) which connects the first wires 30F and the exterior is formed at an outer circumferential end of the first wires 30F. The via conductor 31 is formed at the inner circumferential end of the first wires 30F. As shown in fig. 2, the second wires 30B are formed in a spiral shape (hexagonal spiral shape) winding counterclockwise from the outer circumference toward the inner circumference. A connection terminal for connecting a connecting cord (not depicted) which connects the second wires 30B and the exterior is formed at an outer circumferential end of the second wires 30B. The via conductor 31 is formed at the inner circumferential end of the second wires 30B. The first wires 30F and the second wires 30B are formed in spiral shapes with the same winding direction when seen from the same face. The first wires 30F and the second wires 30B function as one coil 20 in which they are electrically connected in series.

The first wires 32F and second wires 32B, and the first wires 34F and second wires 34B have the same relationship as that of the first wires 30F and second wires 30B. The first wires 32F and second wires 32B are formed in spiral shapes with the same winding direction when seen from the same face. The first wires 32F and second wires 32B function as one coil 22 in which they are electrically connected in series. The first wires 34F and second wires 34B are formed in spiral shapes with the same winding direction when seen from the same face. The first wires 34F and second wires 34B function as one coil 24 in which they are electrically connected in series.

The first face 10F and the first wires 30F, 32F, 34F are covered over by a resin insulating layer, although this is not shown in the drawings. The second face 10B and the second wires 30B, 32B, 34B are likewise covered over by a resin insulating layer.

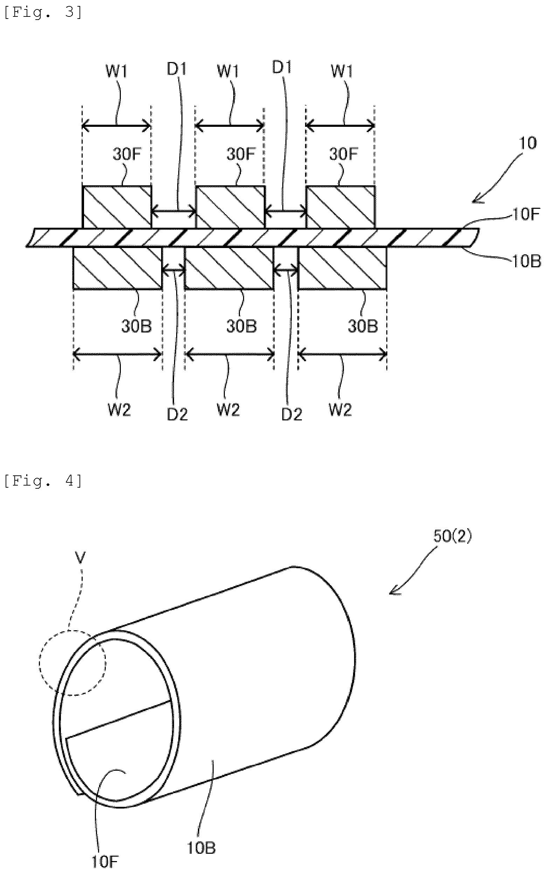

Fig. 3 is a view in cross section of a portion of the coil board 2. Fig. 3 is a view in the cross section between III-III in fig. 1 and 2. The structure of the coil 20 (first wires 30F and second wires 30B) will be described in detail with reference to fig. 3. Fig. 3 shows a cross section of a portion of the coil 20, but the coils 22, 24 also have the same structure.

As shown in fig. 3, the first wires 30F on the first face 10F and the second wires 30B on the second face overlap when the first wires 30F and the second wires 30B are projected on the first face 10F with light perpendicular to the first face 10F. That is to say, the first wires 30F on the first face 10F and the second wires 30B on the second face 10B are overlapping through the flexible board 10 in a thickness direction (a vertical direction in the drawing). An inter-wire distance D1 of the first wires 30F is greater than an inter-wire distance D2 of the second wires 30B. A width W1 of the first wires 30F is smaller than a width W2 of the second wires 30B.

Fig. 4 is an oblique view schematically showing a motor coil board 50 employing the coil board 2 of the embodiment (fig. 1-3). As shown in fig. 4, the motor coil board 50 for a motor is formed by winding the coil board 2 of the embodiment (fig. 1-3) into a cylindrical shape. When the coil board 2 is wound into a cylindrical shape, it is wound in a circumferential direction about an axis parallel to the short side 10S at one end, starting from one end of the long side 10L (fig. 1 and 2). The coil board 2 is wound around multiple times.

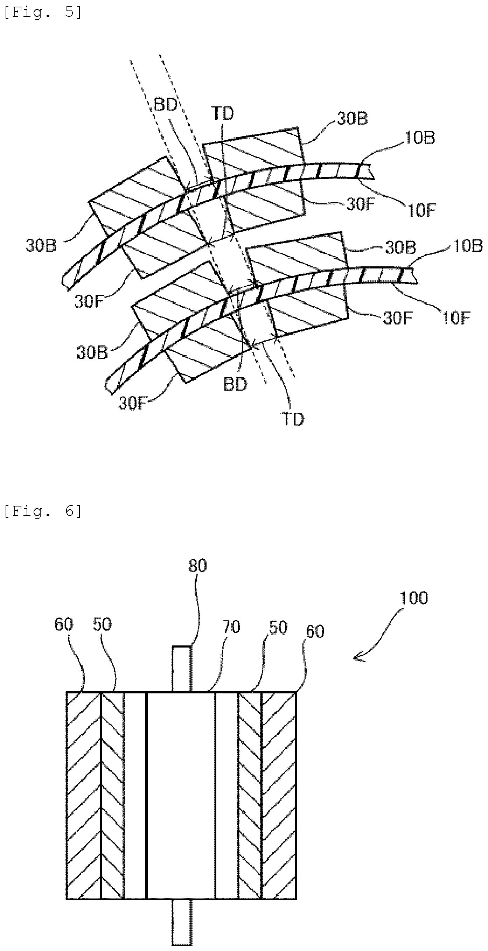

Fig. 5 is an enlarged explanatory diagram of the part V in fig. 4. As shown in fig. 4 and 5, when the motor coil board 50 of the embodiment is wound into a cylindrical shape, the first face 10F is arranged on the inner circumferential side and the second face 10B is arranged on the outer circumferential side. As shown in fig. 5, a distance TD between top portions of the first wires 30F arranged on the inner circumferential side is largely equal to a distance BD between bottom portions of the second wires 30B arranged on the outer circumferential side. The top portions of the first wires 30F are the parts of the first wires 30F at the greatest height from the first face 10F. The bottom portions of the second wires 30B are the parts of the second wires 30B touching the second face 10B.

The distances TD, BD are 10 pm-50 µm (preferably 15 pm-30 pm), for example.

Fig. 6 is a view in cross section schematically showing a motor 100 employing the motor coil board 50 of the embodiment (fig. 4 and 5). The motor 100 is formed by arranging the motor coil board 50 on the inside of a yoke 60, and arranging a rotary shaft 80 and a magnet 70, which is fixed to the rotary shaft 80, on the inside of the motor coil board 50.

The configurations of the coil board 2 (fig. 1-3), the motor coil board 50 (fig. 4 and 5), and the motor 100 (fig. 6) of the embodiment are as described above. As indicated above, in the coil board 2 of the embodiment, the inter-wire distance D1 of the first wires 30F is greater than the inter-wire distance D2 of the second wires 30B (fig. 3). The width W1 of the first wires 30F is smaller than the width W2 of the second wires 30B. The first wires 30F on the first face 10F and the second wires 30B on the second face are overlapping when the first wires 30F and the second wires 30B are projected on the first face 10F with light perpendicular to the first face 10F. When the motor coil board 50 (fig. 4 and 5) is formed using the coil board 2 of the embodiment, a distance is therefore maintained between the first wires 30F arranged on the inner circumferential side, and there is no contact between said wires. The occurrence of a short circuit between the first wires 30F is also suppressed when a high voltage is applied. When the motor 100 (fig. 6) is formed by using the coil board 2 (motor coil board 50), the withstand voltage of the motor 100 is ensured and a motor 100 having stable performance can be obtained.

Furthermore, when the coil board 2 is wound into a cylindrical shape in the motor coil board 50 which is formed by winding the coil board 2 into a cylindrical shape, the top portions of the first wires 30F arranged on the inner circumferential side are closest together, and the bottom portions of the second wires 30B arranged on the outer circumferential side are closest together (fig. 5). In the motor coil board 50, the distance TD between the top portions of the first wires 30F and the distance BD between the bottom portions of the second wires 30B are kept largely equal (fig. 5). The occurrence of a short circuit between the first wires 30F is therefore also suppressed when a high voltage is applied. Furthermore, the distance between the second wires 30B does not open up excessively either, so a space factor of the motor coil board 50 can also be kept at a high level. By forming the motor 100 using the motor coil board 50, it is possible to obtain a motor 100 with more stable performance. The distance TD is an example of the "first distance". The distance BD is an example of the "second distance".

### [First modified example of the embodiment]

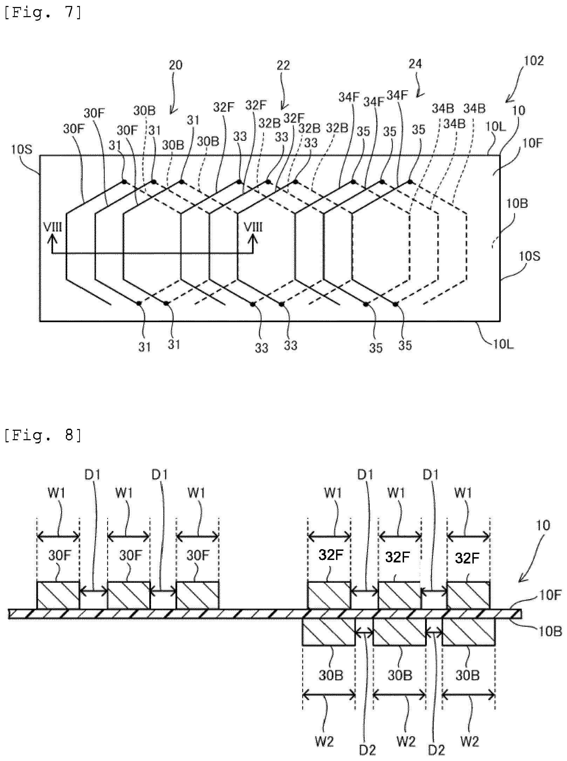

Fig. 7 and 8 show a first modified example of the embodiment. In the first modified example, the arrangement of the wires constituting the coils 20, 22, 24 is different from that of the embodiment. Fig. 7 is a plan view showing a coil board 102 according to the first modified example. As shown in fig. 7, in order to form the coil 20, a first wire 30F constituting a half turn of one turn is formed on the first face 10F side, a second wire 30B constituting a remaining half turn is formed on the second face 10B side, and adjacent turns are arranged offset from each other. In fig. 7, the coil 20 comprises three turns of wires. The first wire 30F and the second wire 30B constituting each turn are electrically connected through via conductors 31 penetrating the flexible board 10.

In the same way, in order to form the coil 22, a first wire 32F constituting a half turn of one turn is formed on the first face 10F side, a second wire 32B constituting a remaining half turn is formed on the second face 10B side, and adjacent turns are arranged offset from each other. The coil 22 comprises three turns of wires. The first wire 32F and the second wire 32B constituting each turn are electrically connected through via conductors 33 penetrating the flexible board 10. In order to form the coil 24, a first wire 34F constituting a half turn of one turn is formed on the first face 10F side, a second wire 34B constituting a remaining half turn is formed on the second face 10B side, and adjacent turns are arranged offset from each other. The coil 24 comprises three turns of wires. The first wire 34F and the second wire 34B constituting each turn are electrically connected through via conductors 35 penetrating the flexible board 10.

As shown in fig. 7, portions of the second wires 30B constituting the coil 20 overlap, through the flexible board 10, portions of the first wires 32F constituting the adjacent coil 22. Portions of the second wires 32B constituting the coil 22 overlap, through the flexible board 10, portions of the first wires 34F constituting the coil 24. The arrangement in fig. 7 is an example and, in another modified example, portions of the second wires 30B constituting the coil 20 need not overlap portions of the first wires 32F constituting the coil 22. Portions of the second wires 32B constituting the coil 22 need not overlap portions of the first wires 34F constituting the adjacent coil 24.

Fig. 8 is a view in cross section of a portion of the coil board 102 according to the first modified example. Fig. 8 is a view in the cross section between VIII-VIII in fig. 7. The inter-wire distance D1 of the first wires 30F, 32F is greater than the inter-wire distance D2 of the second wires 30B in the coil board 102 according to the first modified example also. The width W1 of the first wires 30F, 32F is smaller than the width W2 of the second wires 30B.

When the motor coil board 50 (fig. 4) is formed by using the coil board 102 according to the first modified example, a distance is maintained between the first wires 30F arranged on the inner circumferential side. The occurrence of a short circuit between the first wires 30F is also suppressed when a high voltage is applied. When the motor 100 (fig. 6) is formed by using the coil board 102 (motor coil board 50), the withstand voltage of the motor 100 is ensured and a motor 100 having stable performance can be obtained.

### [Second modified example of the embodiment]

In the second modified example, the width W1 of the first wires 30F (see fig. 3 and 8) is largely equal to the width W2 of the second wires 30B. In this case also, the inter-wire distance D1 of the first wires 30F is greater than the inter-wire distance D2 of the second wires 30B.

### Key to Symbols

2: Coil board
10: Flexible board
10F: First face
10B: Second face
20, 22, 24: Coil
30F, 32F, 34F: First wire
30B, 32B, 34B: Second wire
31, 33, 35: Via conductor
50: Motor coil board
60: Yoke
70: Magnet
80: Rotary shaft
100: Motor
102: Coil board

## Claims

1. A coil board comprising:
a flexible board having a first face and a second face on the opposite side to the first face; and
coils formed by coil-shaped wires provided on the first face and coil-shaped wires provided on the second face, wherein an inter-wire distance of the wires on the first face is greater than an inter-wire distance of the wires on the second face.

2. The coil board of claim 1, wherein the width of the wires on the first face is smaller than the width of the wires on the second face.

3. The coil board of claim 1, wherein the wires on the first face overlap the wires on the second face when the wires on the first face and the wires on the second face are projected on the first face with light perpendicular to the first face.

4. A motor coil board formed by winding the coil board of claim 1 into a cylindrical shape, wherein the first face is arranged on an inner circumferential side and the second face is arranged on an outer circumferential side.

5. A motor coil board formed by winding, into a cylindrical shape, a coil board comprising a flexible board having a first face and a second face on the opposite side to the first face; and coils formed by coil-shaped wires provided on the first face and coil-shaped wires provided on the second face, wherein
the first face is arranged on an inner circumferential side,
the second face is arranged on an outer circumferential side, and
a first distance between top portions of the wires on the first face is largely equal to a second distance between bottom portions of the wires on the second face arranged on the outer circumferential side.

6. A motor formed by arranging the motor coil board of claim 4 or 5 on the inside of a cylindrical yoke, and arranging a rotary shaft and a magnet on the inside of the motor coil board.
